(19) Europäisches Patentamt
European Patent Office
Office européen des brevets

(11) **EP 3 433 679 B1**

(12) **FASCICULE DE BREVET EUROPEEN**

(45) Date de publication et mention
de la délivrance du brevet:
**04.11.2020  Bulletin 2020/45**

(21) Numéro de dépôt: **17716963.8**

(22) Date de dépôt: **22.03.2017**

(51) Int Cl.:
***G03H 1/08*** (2006.01)

(86) Numéro de dépôt international:
**PCT/FR2017/050671**

(87) Numéro de publication internationale:
**WO 2017/162985 (28.09.2017 Gazette 2017/39)**

(54) **PROCÉDÉ D'OBSERVATION D'UN ÉCHANTILLON PAR CALCUL D'UNE IMAGE COMPLEXE**

VERFAHREN ZUR BEOBACHTUNG EINER PROBE DURCH BERECHNUNG EINES KOMPLEXEN BILDES

METHOD FOR OBSERVING A SAMPLE, BY CALCULATION OF A COMPLEX IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2016  FR 1652500**

(43) Date de publication de la demande:
**30.01.2019  Bulletin 2019/05**

(73) Titulaire: **Commissariat à l'Énergie Atomique et aux Énergies Alternatives 75015 Paris (FR)**

(72) Inventeurs:
• **HERVE, Lionel**
  **38700 Corenc (FR)**
• **ALLIER, Cédric**
  **38000 Grenoble (FR)**

(74) Mandataire: **INNOV-GROUP
310, avenue Berthelot
69372 Lyon Cedex 08 (FR)**

(56) Documents cités:
**WO-A1-2016/151248**

• **DENIS L ET AL: "Numerical suppression of the twin image in in-line holography of a volume of micro-objects; Numerical suppression of the twin image", MEASUREMENT SCIENCE AND TECHNOL, IOP, BRISTOL, GB, vol. 19, no. 7, 1 juillet 2008 (2008-07-01), page 74004, XP020136298, ISSN: 0957-0233**
• **KOREN G ET AL: "TWIN-IMAGE ELIMINATION IN IN-LINE HOLOGRAPHY OF FINITE-SUPPORT COMPLEX OBJECTS", OPTICS LETTERS, OPTICAL SOCIETY OF AMERICA, US, vol. 16, no. 24, 15 décembre 1991 (1991-12-15), pages 1979-1981, XP000244017, ISSN: 0146-9592**
• **HATTAY JAMEL ET AL: "Digital in-line particle holography: twin-image suppression using sparse blind source separation", SIGNAL, IMAGE AND VIDEO PROCESSING, SPRINGER LONDON, LONDON, vol. 9, no. 8, 25 mai 2014 (2014-05-25), pages 1767-1774, XP035537055, ISSN: 1863-1703, DOI: 10.1007/S11760-014-0646-3 [extrait le 2014-05-25]**

Remarques:
Le dossier contient des informations techniques présentées postérieurement au dépôt de la demande et ne figurant pas dans le présent fascicule.

**Description**

**DOMAINE TECHNIQUE**

Le domaine technique de l'invention est lié à l'observation d'un échantillon, en particulier un échantillon biologique, par imagerie sans lentille.

**ART ANTERIEUR**

L'observation d'échantillons, et en particulier des échantillons biologiques, par imagerie sans lentille connaît un développement important depuis ces dix dernières années. Cette technique permet d'observer un échantillon en le disposant entre une source de lumière et un capteur d'image, sans disposer de lentille de grossissement optique entre l'échantillon et le capteur d'image. Ainsi, le capteur d'image collecte une image de l'onde lumineuse transmise par l'échantillon.

Cette image est formée de figures d'interférence entre l'onde lumineuse émise par la source de lumière et transmise par l'échantillon, et des ondes de diffraction, résultant de la diffraction par l'échantillon de l'onde lumineuse émise par la source de lumière. Ces figures d'interférences sont parfois dénommées figures de diffraction, ou désignées par le terme anglais « diffraction pattern ».

Le document WO2008090330 décrit un dispositif permettant l'observation d'échantillons biologiques, en l'occurrence des cellules, par imagerie sans lentille. Le dispositif permet d'associer, à chaque cellule, une figure d'interférence dont la morphologie permet d'identifier le type de cellule. L'imagerie sans lentille apparaît alors comme une alternative simple, et peu onéreuse, à un microscope classique. De plus, son champ d'observation est nettement plus important que ne peut l'être celui d'un microscope. On comprend alors que les perspectives d'application liées à cette technologie sont importantes.

D'une façon générale, l'image formée sur le capteur d'image, comportant des figures d'interférence, peut être traitée par un algorithme de reconstruction holographique, de manière à estimer des propriétés optiques de l'échantillon, par exemple un facteur de transmission ou une phase. De tels algorithmes sont bien connus dans le domaine de la reconstruction holographique. Pour cela, la distance entre l'échantillon et le capteur d'image étant connue, on applique un algorithme de propagation, prenant en compte cette distance, ainsi que la longueur d'onde de l'onde lumineuse émise par la source de lumière. On peut alors reconstituer une image d'une propriété optique de l'échantillon. L'image reconstruite peut, en particulier, être une image complexe de l'onde lumineuse transmise par l'échantillon, comportant des informations sur les propriétés optiques d'absorption ou de variation de phase de l'échantillon. Mais les algorithmes de reconstruction holographiques peuvent induire un bruit de reconstruction dans l'image reconstruite, désigné par le terme de « twin image ». Cela est essentiellement dû au fait que l'image formée sur le capteur d'image ne comporte pas d'information relative à la phase de l'onde lumineuse atteignant ce capteur. De ce fait, la reconstruction holographique s'effectue sur la base d'une information optique partielle, basée uniquement sur l'intensité de l'onde lumineuse collectée sur le capteur d'image. L'amélioration de la qualité de la reconstruction holographique fait l'objet de nombreux développements, en mettant en œuvre des algorithmes fréquemment dénommés « Phase retrieval », permettant une estimation de la phase de l'onde lumineuse auquel le capteur d'image est exposé.

Un algorithme de reconstruction numérique est par exemple décrit dans US2012/0218379.

Il est aussi connu la publication suivante : "Numerical suppression of the twin image in in-line holography of a volume of micro-objects", DENIS L ET AL, MEASUREMENT SCIENCE AND TECHNOL, IOP, BRISTOL, GB, vol. 19, no. 7, 1 juillet 2008 (2008-07-01), page 74004.

Les inventeurs proposent un procédé d'observation d'un échantillon par une méthode d'imagerie holographique, le procédé comprenant une étape de reconstruction d'une image complexe de l'échantillon. Cette étape de reconstruction permet d'obtenir une image complexe de bonne qualité, donnant des informations sur les propriétés optiques de l'échantillon.

**EXPOSE DE L'INVENTION**

Un objet de l'invention est un procédé d'observation d'un échantillon comportant les étapes suivantes :

   a) illumination de l'échantillon à l'aide d'une source de lumière, apte à émettre une onde lumineuse se propageant vers l'échantillon ;
   b) acquisition, à l'aide d'un capteur d'image, d'une image de l'échantillon, formée dans un plan de détection, l'échantillon étant disposé entre la source de lumière et le capteur d'image, chaque image étant représentative d'une onde lumineuse transmise par l'échantillon sous l'effet de ladite illumination ;
   c) calcul d'une image complexe représentative de l'échantillon ;

Le calcul de ladite image complexe comporte les sous étapes suivantes :

i) définition d'une image initiale de l'échantillon dans le plan de détection, à partir de l'image acquise par le capteur d'image ;

ii) détermination d'une image complexe de l'échantillon dans un plan de reconstruction en appliquant un opérateur de propagation à l'image initiale de l'échantillon définie lors de la sous-étape i) ou l'image de l'échantillon, dans le plan de détection, résultant de l'itération précédente ;

iii) calcul d'un indicateur de bruit à partir de l'image complexe déterminée lors de la sous-étape ii), cet indicateur de bruit dépendant, de préférence selon une fonction croissante ou décroissante, d'un bruit de reconstruction affectant ladite image complexe ;

iv) mise à jour de l'image de l'échantillon dans le plan de détection par un ajustement de valeurs de phase des pixels de l'image initiale ou de l'image de l'échantillon résultant de l'itération précédente, dans le plan de détection, l'ajustement étant réalisé en fonction d'une variation de l'indicateur calculé lors de la sous-étape iii) selon lesdites valeurs de phase ;

v) réitération des sous-étapes ii) à iv) jusqu'à l'atteinte d'un critère de convergence, de façon à obtenir une image complexe de référence de l'échantillon dans le plan détection, ou dans le plan de reconstruction.

La sous-étape iii), comporte : en outre

- pour différents pixels, le calcul d'une grandeur associée à chaque pixel, en fonction de la valeur de l'image complexe déterminée lors de la sous-étape ii) audit pixel, ou d'une dérivée dimensionnelle de ladite image complexe audit pixel ;
- la combinaison des grandeurs calculées , en différents pixels, de façon à obtenir l'indicateur de bruit.

Selon un mode de réalisation, la norme calculée en chaque pixel est de préférence une norme d'ordre inférieur ou égal à 1.

Elle peut être obtenue à partir d'une dérivée dimensionnelle de l'image complexe, cette dérivée étant calculée en plusieurs pixels de l'image, voire à chaque pixel de l'image. Elle peut également être obtenue à partir de la valeur de l'image complexe en plusieurs pixels de l'image, voire à chaque pixel de l'image.

L'indicateur de bruit quantifie le bruit de reconstruction affectant l'image complexe reconstruite. Il peut s'agir d'une norme d'ordre inférieur ou égal à 1 calculée à partir des grandeurs associées à chaque pixel.

La grandeur associée à chaque pixel peut être calculée à partir du module d'une dérivée dimensionnelle, audit pixel, de l'image complexe déterminée lors de la sous-étape ii).

Elle peut être obtenue à partir d'une dérivée dimensionnelle de l'image complexe, cette dérivée étant calculée en plusieurs pixels de l'image, voire à chaque pixel de l'image. Elle peut également être obtenue à partir de la valeur de l'image complexe en plusieurs pixels de l'image, voire à chaque pixel de l'image.

Selon un mode de réalisation,

- lors de la sous-étape i), l'image initiale de l'échantillon est définie par une normalisation de l'image acquise par le capteur d'image, par une image représentative de l'onde lumineuse émise par la source de lumière ;
- lors de la sous-étape iii), la grandeur associée à chaque pixel est calculée en fonction de la valeur de l'image complexe déterminée lors de la sous-étape ii), audit pixel, soustraite d'un nombre strictement positif, par exemple le nombre 1.

Le procédé peut comprendre l'une des caractéristiques suivantes, prises isolément ou en combinaison :

- lors de la sous-étape iii), l'indicateur est une somme, éventuellement pondérée, de la grandeur associée à chaque pixel de l'image complexe déterminée lors de la sous-étape ii) ;
- lors de la sous-étape iv), l'ajustement de la valeur de la phase de chaque pixel est réalisé en constituant un vecteur, dit vecteur de phase, dont chaque terme correspond à la valeur de la phase d'un pixel de l'image de l'échantillon dans le plan de détection , ce vecteur étant mis à jour, au cours de chaque itération, de façon soit à minimiser, soit à maximiser l'indicateur de bruit calculé lors de la sous-étape iii), en se basant sur un gradient de l'indicateur de bruit selon chaque terme dudit vecteur de phase. La mise à jour du vecteur de phase peut être réalisée par un algorithme de minimisation ou de maximisation basé sur un gradient de l'indicateur de bruit (selon chaque terme dudit vecteur de phase.

Le plan de reconstruction peut s'étendre de préférence parallèlement, ou sensiblement parallèlement au plan de détection. De préférence, le plan de reconstruction est un plan selon lequel s 'étend l'échantillon.

Selon un mode de réalisation, aucune optique de grossissement n'est interposée entre l'échantillon et le capteur d'image.

Le procédé peut comporter une étape d) de caractérisation de l'échantillon en fonction de l'image complexe calculée.

L'échantillon peut notamment comporter des particules en suspension dans un milieu continu. Par caractérisation, on entend par exemple :

- une détermination de la nature d'une particule, c'est-à-dire une classification de cette particule parmi une ou plusieurs classes prédéterminées ;
- une détermination de l'état d'une particule, parmi un ou plusieurs états prédéterminés ;
- une estimation de la taille d'une particule, ou de sa forme, ou de son volume ou tout autre paramètre géométrique ;
- une estimation d'une propriété optique d'une ou plusieurs particules, par exemple l'indice de réfraction ou une propriété de transmission optique ;
- un dénombrement desdites particules.

D'autres avantages et caractéristiques ressortiront plus clairement de la description qui va suivre de modes particuliers de réalisation de l'invention, donnés à titre d'exemples non limitatifs, et représentés aux dessins listés ci-dessous.

## FIGURES

La figure 1 représente un exemple de dispositif selon l'invention.
La figure 2A illustre les principales étapes d'un procédé permettant le calcul d'une image complexe de l'échantillon dans un plan de reconstruction.
Les figures 2B, 2C, 2D et 2E représentent respectivement :

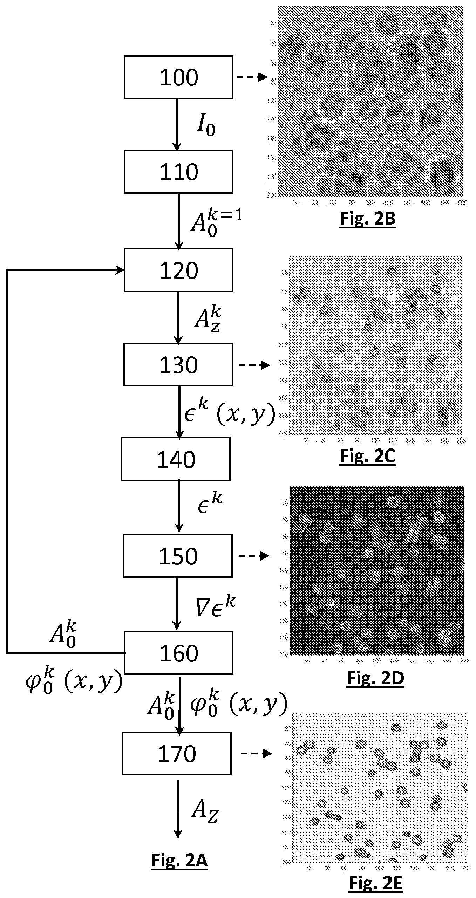

- un hologramme acquis par le capteur d'image ;
- une image reconstruite dans un plan de reconstruction lors d'une première itération du procédé représenté sur la figure 2A ;
- une image représentant une grandeur associée à chaque pixel de l'image représentée sur la figure 2C ;
- une représentation d'une image reconstruite après plusieurs itérations du procédé représenté sur la figure 2A.

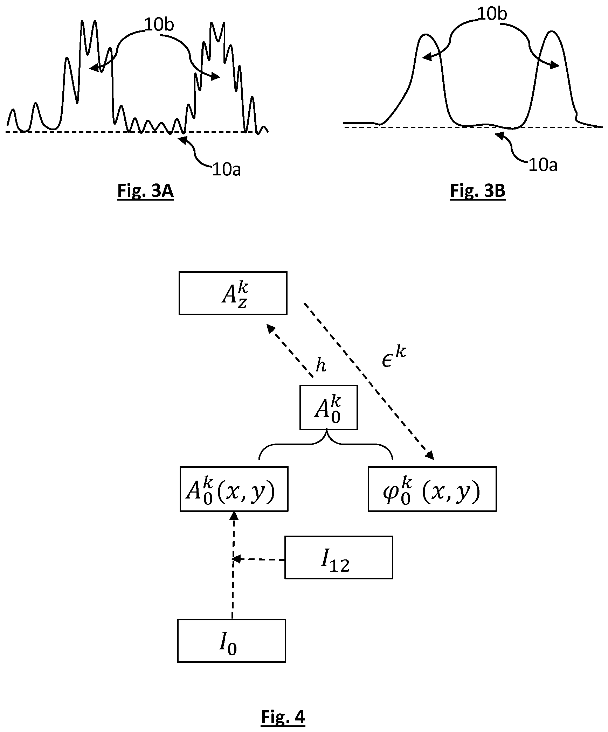

Les figures 3A et 3B schématisent un profil du module ou de la phase d'une image complexe obtenue par reconstruction holographique, respectivement en présence et sans bruit de reconstruction.
La figure 4 résume le fonctionnement d'un procédé mettant en œuvre l'invention.

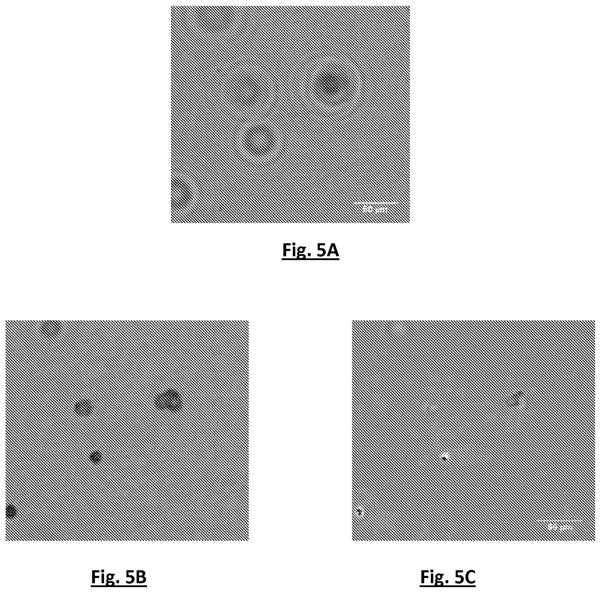

La figure 5A est un hologramme acquis par un capteur d'image, l'échantillon comportant des cellules dispersées dans une phase continue aqueuse. Les figures 5B et 5C représentent respectivement le module et la phase d'une image complexe dans le plan de l'échantilllon, cette image complexe étant formée en mettant en œuvre l'invention.

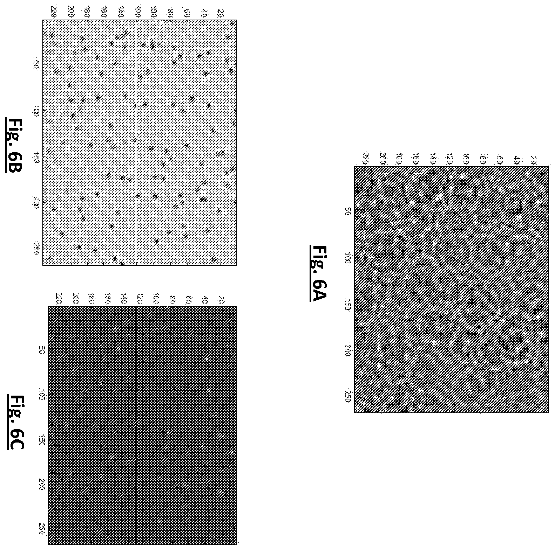

La figure 6A est un hologramme acquis par un capteur d'image, l'échantillon comportant des globules rouges dispersées dans une phase continue aqueuse ; Les figures 6B et 6C représentent respectivement le module et la phase d'une image complexe dans le plan de l'échantilllon, cette image complexe étant formée en mettant en œuvre l'invention.

## EXPOSE DE MODES DE REALISATION PARTICULIERS

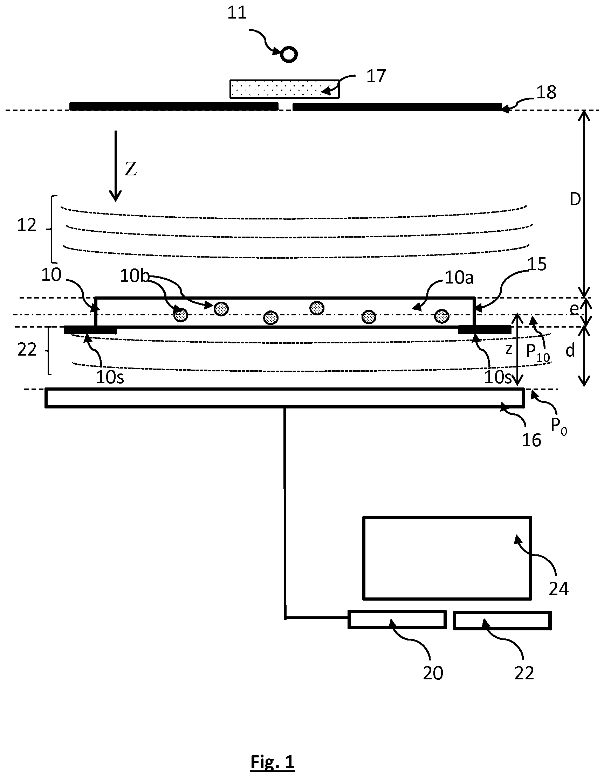

La figure 1 représente un exemple de dispositif selon l'invention. Une source de lumière 11 est apte à émettre une onde lumineuse 12, dite onde lumineuse incidente, se propageant en direction d'un échantillon 10, selon un axe de propagation Z. L'onde lumineuse est émise selon une bande spectrale $\Delta\lambda$, comportant une longueur d'onde $\lambda$. Cette longueur d'onde peut être une longueur d'onde centrale de ladite bande spectrale.

L'échantillon 10 est un échantillon que l'on souhaite caractériser. Il peut notamment s'agir d'un milieu 10a comportant des particules 10b. Les particules 10b peuvent être des particules sanguines, par exemple des globules rouges. Il peut également s'agir de cellules, de microorganismes, par exemple des bactéries ou des levures, des microalgues, des microbilles, ou des gouttelettes insolubles dans le milieu liquide, par exemple des nanoparticules lipidiques. De préférence, les particules 10b ont un diamètre, ou sont inscrites dans un diamètre, inférieur à 1 mm, et de préférence inférieure à 100 $\mu$m. Il s'agit de microparticules (diamètre inférieur à 1 mm) ou de nanoparticules (diamètre inférieur à 1 $\mu$m). Le milieu 10a, dans lequel baignent les particules, peut être un milieu liquide, par exemple une phase liquide d'un liquide corporel, d'un milieu de culture ou d'un liquide prélevé dans l'environnement ou dans un procédé industriel. Il peut également s'agir d'un milieu solide ou ayant la consistance d'un gel, par exemple un substrat de type gélose, propice à la croissance de colonies bactériennes.

L'échantillon 10 est contenu dans une chambre fluidique 15. La chambre fluidique 15 est par exemple une micro-cuvette, d'utilisation courante dans les dispositifs de type point of care, dans laquelle l'échantillon 20 pénètre, par exemple par capillarité. L'épaisseur e de l'échantillon 10, selon l'axe de propagation varie typiquement entre 20 $\mu$m et 1 cm, et est de préférence comprise entre 50 $\mu$m et 500 $\mu$m, par exemple 150 $\mu$m.

L'échantillon s'étend selon un plan $P_{10}$, dit plan de l'échantillon, perpendiculaire à l'axe de propagation. Il est maintenu sur un support 10s.

La distance D entre la source de lumière 11 et l'échantillon 10 est de préférence supérieure à 1 cm. Elle est de préférence comprise entre 2 et 30 cm. De préférence, la source de lumière, vue par l'échantillon, est considérée comme ponctuelle. Cela signifie que son diamètre (ou sa diagonale) est préférentiellement inférieur au dixième, mieux au centième de la distance entre l'échantillon et la source de lumière. Ainsi, de préférence, la lumière parvient à l'échantillon sous la forme d'ondes planes, ou pouvant être considérées comme telles.

La source de lumière 11 peut être une diode électroluminescente ou une diode laser. Elle peut être associée à diaphragme 18, ou filtre spatial. L'ouverture du diaphragme est typiquement comprise entre 5 $\mu$m et 1 mm, de préférence entre 50 $\mu$m et 500 $\mu$m. Dans cet exemple, le diaphragme est fourni par Thorlabs sous la référence P150S et son diamètre est de 150 $\mu$m. Le diaphragme peut être remplacé par une fibre optique, dont une première extrémité est placée face à la source de lumière 11 et dont une deuxième extrémité est placée face à l'échantillon 10.

Le dispositif comporte de préférence un diffuseur 17, disposé entre la source de lumière 11 et le diaphragme 18. L'usage d'un tel diffuseur permet de s'affranchir de contraintes de centrage de la source de lumière 11 par rapport à l'ouverture du diaphragme 18. La fonction d'un tel diffuseur est de répartir le faisceau lumineux, produit par une source de lumière élémentaire $11_i$, ($1 \leq i \leq 3$) selon un cône d'angle a, a étant égal à 30° dans le cas présent. De préférence, l'angle de diffusion $\alpha$ varie entre 10° et 80°.

De préférence, la bande spectrale d'émission $\Delta\lambda$ de l'onde lumineuse incidente 12 a une largeur inférieure à 100 nm. Par largeur de bande spectrale, on entend une largeur à mi-hauteur de ladite bande spectrale.

L'échantillon 10 est disposé entre la source de lumière 11 et un capteur d'image 16. Ce dernier s'étend de préférence parallèlement, ou sensiblement parallèlement au plan selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise.

Le capteur d'image 16 est apte à former une image selon un plan de détection $P_0$. Dans l'exemple représenté, il s'agit d'un capteur d'image comportant une matrice de pixels, de type CCD ou un CMOS. Les CMOS sont les capteurs préférés car la taille des pixels est plus faible, ce qui permet d'acquérir des images dont la résolution spatiale est plus favorable. Le plan de détection $P_0$ s'étend de préférence perpendiculairement à l'axe de propagation Z de l'onde lumineuse incidente 12.

La distance d entre l'échantillon 10 et la matrice de pixels du capteur d'image 16 est préférentiellement comprise entre 50 $\mu$m et 2 cm, de préférence comprise entre 100 $\mu$m et 2 mm.

On remarque l'absence d'optique de grossissement entre le capteur d'image 16 et l'échantillon 10. Cela n'empêche pas la présence éventuelle de microlentilles de focalisation au niveau de chaque pixel du capteur d'image 16, ces dernières n'ayant pas de fonction de grandissement de l'image acquise par le capteur d'image.

Sous l'effet de l'onde lumineuse incidente 12, l'échantillon 10 engendre une onde diffractée, susceptible de produire, au niveau du plan de détection $P_0$, des interférences, en particulier avec une partie de l'onde lumineuse incidente 12 transmise par l'échantillon. Par ailleurs, l'échantillon peut absorber une partie de l'onde lumineuse incidente 12. Ainsi, l'onde lumineuse 22, transmise par l'échantillon, et à laquelle est exposé le capteur d'image 20, peut comprendre :

- une composante résultant de la diffraction de l'onde lumineuse incidente 12 par l'échantillon ;
- une composante résultant de l'absorption de l'onde lumineuse incidente 12 par l'échantillon.

L'onde lumineuse 22 peut également être désignée par le terme onde lumineuse d'exposition. Un processeur 20, par exemple un microprocesseur, est apte à traiter chaque image acquise par le capteur d'image 16. En particulier, le processeur est un microprocesseur relié à une mémoire programmable 22 dans laquelle est stockée une séquence d'instructions pour effectuer les opérations de traitement d'images et de calculs décrites dans cette description. Le processeur peut être couplé à un écran 24 permettant l'affichage d'images acquises par le capteur d'image 16 ou calculées par le processeur 20.

Une image acquise sur le capteur d'image 16, également appelée hologramme, ne permet pas d'obtenir une représentation suffisamment précise de l'échantillon observé. Comme décrit en lien avec l'art antérieur, on peut appliquer, à chaque image acquise par le capteur d'image, un opérateur de propagation $h$, de façon à calculer une grandeur représentative de l'onde lumineuse 22 transmise par l'échantillon 10, et à laquelle est exposé le capteur d'image 16. Un tel procédé, désigné par le terme reconstruction holographique, permet notamment de reconstruire une image du module ou de la phase de cette onde lumineuse 22 dans un plan de reconstruction parallèle au plan de détection $P_0$, et notamment dans le plan $P_{10}$ selon lequel s'étend l'échantillon. Pour cela, on effectue un produit de convolution de l'image $I_0$ acquise par s'étend l'échantillon. Pour cela, on effectue un produit de convolution de l'image $I_0$ acquise par le capteur d'image 16 par un opérateur de propagation $h$. Il est alors possible de reconstruire une expression complexe $A$ de l'onde lumineuse 22 en tout point de coordonnées $(x,y,z)$ de l'espace, et en particulier dans un plan de reconstruction $P_z$ situé à une distance $|z|$ du capteur d'image 16, ce plan de reconstruction pouvant être le plan de l'échantillon $P_{10}$. L'expression complexe $A$ est une grandeur complexe dont l'argument et le module sont respectivement représentatifs de la phase et de l'intensité de l'onde lumineuse 22 à laquelle est exposé le capteur d'image 16. Le produit de convolution de l'image $I_0$ par l'opérateur de propagation $h$ permet d'obtenir une image complexe $A_z$ représentant une distribution spatiale de l'expression complexe $A$ dans un plan, dit plan de reconstruction $P_z$, s'étendant à une coordonnée $z$ du plan de détection $P_0$. Dans cet exemple, le plan de détection $P_0$ a pour équation $z = 0$. Cette image complexe correspond à une image complexe de l'échantillon dans le plan de reconstruction $P_z$. Elle représente également une distribution spatiale bidimensionnelle des propriétés optiques de l'onde 22 à laquelle est exposée le capteur d'image 16.

L'opérateur de propagation $h$ a pour fonction de décrire la propagation de la lumière entre le capteur d'image 16 et un point de coordonnées $(x, y, z)$, situé à une distance $|z|$ de ce dernier. Il est alors possible de déterminer le module $M(x, y, z)$ et/ou la phase $\varphi(x,y,z)$ l'onde lumineuse 22, à cette distance $|z|$, dite distance de reconstruction, avec :

$$M(x,y,z) = abs\,[A(x,y,z)] \quad (1)$$

$$\varphi(x,y,z) = arg\,[A(x,y,z)] \quad (2)$$

Les opérateurs abs et arg désignent respectivement le module et l'argument.

Autrement dit, l'amplitude complexe $A$ de l'onde lumineuse 22 en tout point de coordonnées $(x, y, z)$ de l'espace est telle que :

$$A(x,y,z) = M(x,y,z)e^{j\varphi(x,y,z)} \quad (3).$$

Cependant, une telle reconstruction s'accompagne d'un bruit de reconstruction pouvant être important, du fait que la propagation est réalisée sur la base d'une image $I_0$ ne comportant pas d'information relative à la phase.

On va à présent décrire un algorithme permettant d'obtenir une image complexe, notée $A_z$ représentant une distribution spatiale de l'amplitude complexe $A(x,y,z)$ à une distance $|z|$, en lien avec la figure 2A, les images obtenues au cours de certaines étapes étant illustrées sur les figures 2B à 2E. Une telle image est représentative de l'onde lumineuse 22, à laquelle est exposé le capteur d'image 16 et permet notamment d'accéder au module ou à la phase de cette onde lumineuse.

Etape 100 : acquisition d'image :

Au cours de cette étape, le capteur d'image 16 acquiert une image $I_0$ de l'échantillon 16, et plus précisément de l'onde lumineuse 22 transmise par ce dernier, à laquelle est exposé le capteur d'image. Une telle image, ou hologramme, est représentée sur la figure 2B.

Cette image a été réalisée en utilisant un échantillon 10 comportant de cellules CHO (cellules ovariennes de hamster) baignant dans un tampon salin, l'échantillon étant contenu dans une chambre fluidique d'épaisseur 100 $\mu$m disposé à une distance d de 1500 $\mu$m d'un capteur CMOS. L'échantillon a été illuminé par une diode électroluminescente 11 dont la bande spectrale d'émission est centrée sur une longueur d'onde de 450 nm et située à une distance D=8 cm de l'échantillon.

Etape 110 : initialisation :

Au cours de cette étape, on définit une image initiale $A_0^{k=0}$ de l'échantillon, à partir de l'image $I_0$ acquise par le capteur d'image 16. Cette étape est une initialisation de l'algorithme itératif décrit ci-après en lien avec les étapes 120 à 180, l'exposant *k* désignant le rang de chaque itération. Le module $M_0^{k=0}$ de l'image initiale $A_0^{k=0}$ peut-être obtenu en appliquant l'opérateur racine carrée à l'image acquise $I_0$ par le capteur d'image, auquel cas $M_0^{k=0} = \sqrt{I_0}$.

Il peut également être obtenu par une normalisation de l'image $I_0$ par un terme représentatif de l'intensité de l'onde lumineuse 12 incidente à l'échantillon 16. Ce dernier peut être :

- la racine carrée d'une moyenne $\overline{I_0}$ de l'image $I_0$, auquel cas chaque pixel $I_0(x,y)$ de l'image acquise est divisé par ladite moyenne, de telle sorte que

$$M_0^{k=0} = \sqrt{\frac{I_0(x,y)}{\overline{I_0}}} \text{ (4)}$$

- une image sans échantillon $I_{12}$ acquise par le capteur d'image 16 en l'absence d'échantillon entre la source de lumière 11 et le capteur d'image, auquel cas la valeur de chaque pixel $I_0(x,y)$ de l'image acquise de l'échantillon est divisée par la valeur de chaque pixel $I_{12}(x,y)$ de l'image sans échantillon :

$$M_0^{k=0} = \sqrt{\frac{I_0(x,y)}{I_{12}(x,y)}} \text{ (4')}$$

- une moyenne $\overline{I_{12}}$ de ladite image sans échantillon, auquel cas chaque pixel $I_0(x,y)$ de l'image acquise est divisé par ladite moyenne :

$$M_0^{k=0} = \sqrt{\frac{I_0(x,y)}{\overline{I_{12}}}} \text{ (4'')}$$

La phase $\varphi_0^{k=0}$ de l'image initiale $A_0^{k=0}$ est soit considérée comme nulle en chaque pixel (*x*, *y*), soit prédéterminée selon une valeur arbitraire. En effet, l'image initiale $A_0^{k=0}$ résulte directement de l'image $I_0$ acquise par le capteur d'image 16. Or, cette dernière ne comporte pas

Etape 120 : propagation :

Au cours de cette étape, l'image $A_0^{k-1}$ obtenue dans le plan de détection est propagée dans un plan de reconstruction $P_z$, par l'application d'un opérateur de propagation tel que précédemment décrit, de façon à obtenir une image complexe $A_z^k$, représentative de l'échantillon, dans le plan de reconstruction $P_z$. Le terme image complexe désigne le fait que chaque terme de cette image est une grandeur complexe. La propagation est réalisée par convolution de l'image $A_0^{k-1}$ par l'opérateur de propagation $h_{-z}$, de telle sorte que :

$$A_z^k = A_0^{k-1} * h_{-z} \text{ (5),}$$

le symbole * désignant un produit de convolution. L'indice -*z* représente le fait que la propagation est réalisée dans un sens opposé à l'axe de propagation Z. On parle de rétro-propagation.

L'opérateur de propagation est par exemple la fonction de Fresnel-Helmholtz, telle que :

$$h(x,y,z) = \frac{1}{j\lambda z} e^{j2\pi\frac{z}{\lambda}} \exp(j\pi\frac{x^2+y^2}{\lambda z}) \text{ (6)}$$

La convolution est généralement réalisée dans le domaine fréquentiel, ou elle se ramène à un produit, auquel cas on utilise la transformée de Fourier de cet opérateur, cette dernière étant :

$$H(\mu, \nu, z) = e^{j2\pi\frac{z}{\lambda}}\exp(-\lambda z(\mu^2 + \nu^2))\ (6')$$

où $\lambda$ désigne la longueur d'onde centrale de la bande spectrale d'émission de la source de lumière 11.

$$\text{Ainsi, } A_z^k(x, y) = A_z^k(r) = -\frac{1}{j\lambda z}e^{-j2\pi\frac{z}{\lambda}}\iint A_0^{k-1}(r')\exp-\left(j\pi\frac{(r-r')^2}{\lambda z}\right)dr'\ (7)$$

où $r$ et $r'$ désignent respectivement des coordonnées radiales, c'est-à-dire dans le plan de reconstruction $P_z$ et dans le plan de détection $P_0$.

Lors de la première itération ($k$ =1), $A_0^{k=0}$ est l'image initiale déterminée lors de l'étape 110. Au cours des itérations suivantes, $A_0^{k-1}$ est l'image complexe dans le plan de détection $P_0$ mise à jour au cours de l'itération précédente.

Le plan de reconstruction $P_z$ est un plan distant du plan de détection $P_0$, et de préférence parallèle à ce dernier. De préférence, le plan de reconstruction $P_z$ est un plan $P_{10}$ selon lequel s'étend l'échantillon 10. En effet, une image reconstruite dans ce plan permet d'obtenir une résolution spatiale généralement élevée. Il peut également s'agir d'un autre plan, situé une résolution spatiale généralement élevée. Il peut également s'agir d'un autre plan, situé une distance non nulle du plan de détection, et de préférence parallèle à ce dernier, par exemple un plan s'étendant entre le capteur d'image 16 et l'échantillon 10.

La figure 2C représente une le module d'une image $A_z^{k=1}$ reconstruite à une distance de 1440 $\mu$m du plan de détection $P_0$ en appliquant l'opérateur de propagation défini ci-dessus à l'hologramme de la figure 2B. Cette image représente l'image complexe, dans le plan de reconstruction, établie lors de la première itération.

Etape 130 : Calcul d'une grandeur en plusieurs pixels de l'image complexe :

Au cours de cette étape, on calcule une grandeur $\varepsilon^k(x,y)$ associée à chaque pixels d'une pluralité de pixels $(x,y)$ de l'image complexe $A_z^k$, et de préférence en chacun de ces pixels. Cette grandeur dépend de la valeur $A_z^k(x,y)$ de l'image $A_z^k$, ou de son module, au pixel $(x,y)$ à laquelle elle est calculée. Elle peut également dépendre d'une dérivée dimensionnelle de l'image en ce pixel, par exemple le module d'une dérivée dimensionnelle de cette image.

Dans cet exemple, la grandeur $\varepsilon^k(x,y)$ associée à chaque pixel $(x,y)$ est basé sur le module d'une dérivée dimensionnelle, telle que :

$$\varepsilon^k(x,y) = \sqrt{\left|\frac{\partial A_z^k(x,y)}{\partial x}\right|^2 + \left|\frac{\partial A_z^k(x,y)}{\partial y}\right|^2}\ (8)$$

L'image étant discrétisé en pixels, les opérateurs de dérivée peuvent être remplacés par des opérateurs de Sobel, de telle sorte que :

$$\varepsilon^k(x,y) = \sqrt{(S_x * A_z^k(x,y))(S_x * A_z^k(x,y))^* + (S_y * A_z^k(x,y))(S_y * A_z^k(x,y))^*}\ (9)$$

où:

- ()* désigne l'opérateur complexe conjugué ;
- $S_x$ et $S_y$ désignent des opérateurs de Sobel selon deux axes orthogonaux X et Y du plan de reconstruction $P_z$.

Selon cet exemple,

$$S_x = \begin{bmatrix} 1 & 0 & -1 \\ 2 & 0 & -2 \\ 1 & 0 & -1 \end{bmatrix} \ (10)$$

et $S_y$ est la matrice transposée de $S_x$.

La figure 2D représente, sous la forme d'une image, la valeur de la grandeur $\varepsilon^k(x,y)$ en chaque pixel de l'image $A_z^{k=1}$ représentée sur la figure 2C.

Etape 140 : établissement d'un indicateur de bruit associé à l'image $A_z^k$ :

Lors de l'étape 130, on a calculé des grandeurs $\varepsilon^k(x,y)$ en plusieurs pixels de l'image complexe $A_z^k$. Ces grandeurs peuvent former un vecteur $\mathbf{E^k}$, dont les termes sont les grandeurs $\varepsilon^k(x,y)$ associées à chaque pixel $(x,y)$.

Dans cette étape, on calcule un indicateur, dit indicateur de bruit, à partir d'une norme du vecteur $\mathbf{E^k}$. D'une façon générale, à une norme est associée un ordre, de telle sorte que la norme $\|\mathbf{x}\|_p$ d'ordre $p$ d'un vecteur $\mathbf{x}$ de dimension $n$ de coordonnées $(x_1, x_2, .... x_{n,})$ est telle que :

$$\|\mathbf{x}\|_p = \left(\sum_{i=1}^n |x_i|^p\right)^{1/p}, \text{ avec } p \geq 0. \ (12)$$

Dans le cas présent, on utilise une norme d'ordre 1, autrement dit $p$ = 1. Les inventeurs ont en effet estimé que le recours à une norme d'ordre 1, ou d'ordre inférieur ou égal à 1, est particulièrement adapté à cet algorithme, pour les raisons expliquées ci-après en lien les figures 3A et 3B.

Au cours de cette étape, la grandeur $\varepsilon^k(x,y)$ calculée à partir de l'image complexe $A_z^k$, à chaque pixel $(x, y)$ de cette dernière, est sommée de façon à constituer un indicateur de bruit $\varepsilon^k$ associé à l'image complexe $A_z^k$.

$$\text{Ainsi, } \varepsilon^k = \sum_{(x,y)} \varepsilon^k(x,y) \ (15).$$

Cet indicateur de bruit $\varepsilon^k$ correspond à une norme de variation totale de l'image complexe $A_z^k$

En se rapportant à l'image de la figure 2D, l'indicateur de bruit $\varepsilon^{k=1}$ est obtenu, lors de la première itération, par une sommation de la valeur des pixels de cette image.

De façon alternative à une norme d'ordre 1, une somme pondérée des grandeurs $\varepsilon^k(x,y)$, ou autre combinaison arithmétique, est également envisageable.

Du fait de l'utilisation d'une norme d'ordre 1, ou d'ordre inférieur ou égal à 1, la valeur de l'indicateur de bruit $\varepsilon^k$ diminue lorsque l'image complexe $A_z^k$ est de plus en plus représentative de l'échantillon. En effet, lors des premières itérations, la valeur de la phase $\varphi_0^k(x,y),$ en chaque pixel $(x, y)$ de l'image $A_0^k$ est mal estimée. La propagation de l'image de l'échantillon du plan de détection $P_0$ vers le plan de reconstruction $P_z$ s'accompagne alors d'un bruit de reconstruction important, comme évoqué en lien avec l'art antérieur. Ce bruit de reconstruction se présente sous la forme de fluctuations apparaissant sur l'image reconstruite. Du fait de ces fluctuations, un indicateur de bruit $\varepsilon^k$, tel que précédemment défini est d'autant plus élevé que la contribution du bruit de reconstruction, sur l'image reconstruite, est importante. En effet, les fluctuations dues au bruit de reconstruction tendent à augmenter la valeur de cet indicateur.

Les figures 3A et 3B schématisent un profil radial du module (ou d'une phase) d'une image reconstruite, en étant affecté d'un bruit de reconstruction respectivement fort et faible. On a considéré ici un échantillon comportant une dispersion de particules 10b dans un milieu homogène transparent 10a. Les profils schématisés comportent deux fluctuations importantes, chacune étant représentative d'une particule 10b. Le profil de la figure 3A comporte également des fluctuations d'amplitude plus faible, et de fréquence élevée, représentatives d'un bruit de reconstruction. L'indicateur de bruit $\varepsilon^k$, tel que précédemment défini, est plus important sur la figure 3A que sur la figure 3B. L'utilisation d'un indicateur $\varepsilon^k$ basé sur une norme d'ordre supérieur à 1 pourrait également convenir, mais une telle norme a tendance à atténuer les fluctuations d'amplitude faible, représentatives du bruit de reconstruction, par rapport aux fluctuations importantes, représentatives de l'échantillon. A l'inverse, une norme d'ordre 1, ou d'ordre inférieur à 1, n'atténue pas les faibles fluctuations par rapport aux fluctuations importantes. C'est pourquoi les inventeurs préfèrent un indicateur de bruit de reconstruction $\varepsilon^k$ basé sur une norme d'ordre 1 ou inférieur à 1.

Un aspect important de cette étape consiste à déterminer, dans le plan de détection $P_0$, des valeurs de phase $\varphi_0^k(x, y)$ de chaque pixel de l'image de l'échantillon $A_0^k$, permettant d'obtenir, lors d'une itération suivante, une image reconstruite $A_z^{k+1}$ dont l'indicateur $\varepsilon^{k+1}$ est inférieur à l'indicateur $\varepsilon^k$.

Lors de la première itération, comme précédemment expliqué, on ne dispose que d'une information pertinente sur l'intensité de l'onde lumineuse 22 mais non sur sa phase. La première image reconstruite $A_z^{k=1}$ dans le plan de reconstruction $P_z$ est donc affectée d'un bruit de reconstruction important, du fait de l'absence d'information pertinente quant à la phase de l'onde lumineuse 22 dans le plan de détection $P_0$. Par conséquent, l'indicateur $\varepsilon^{k=1}$ est élevé. Au cours des itérations suivantes, l'algorithme procède à un ajustement progressif de la phase $\varphi_0^k(x, y)$ dans le plan de détection $P_0$, de façon à minimiser progressivement l'indicateur $\varepsilon^k$. L'image $A_0^k$ dans le plan de détection est représentative de l'onde lumineuse 22 dans le plan de détection $P_0$, aussi bien du point de vue de son intensité que de sa phase.

Les étapes 120 à 160 visent à établir, de façon itérative, la valeur de la phase $\varphi_0^k(x, y)$ de chaque pixel de l'image $A_0^k$, minimisant l'indicateur $\varepsilon^k$, ce dernier étant obtenu sur l'image $A_z^k$ obtenue par propagation de l'image $A_0^{k-1}$ dans le plan de reconstruction $P_z$.

L'algorithme de minimisation peut être un algorithme de descente de gradient, ou de descente de gradient conjugué, ce dernier étant décrit ci-après.

Etape 150 : Ajustement de la valeur de la phase dans le plan de détection.

L'étape 150 vise à déterminer une valeur de la phase $\varphi_0^k(x, y)$ de chaque pixel de l'image complexe $A_0^k$ de façon à minimiser l'indicateur $\varepsilon^{k+1}$ résultant d'une propagation de l'image complexe $A_0^k$ dans le plan de reconstruction $P_z$, au cours de l'itération suivante k+1.

Pour cela, un vecteur de phase $\boldsymbol{\varphi_0^k}$ est établi, dont chaque terme est la phase $\varphi_0^k(x, y)$ d'un pixel $(x,y)$ de l'image complexe $A_0^k$. La dimension de ce vecteur est $(N_{pix}, 1)$, où $N_{pix}$ désigne le nombre de pixels considérés. Ce vecteur est mis à jour au cours de chaque itération, par l'expression de mise à jour suivante :

$$\varphi_0^k(x, y) = \varphi_0^{k-1}(x, y) + \alpha^k p^k(x, y) \ (16)$$

où :

- $\alpha^k$ est un scalaire, désigné par le terme « pas », et représentant une distance ;
- $\boldsymbol{p^k}$ est un vecteur de direction, de dimension $(N_{pix}, 1)$, dont chaque terme $p(x, y)$ forme une direction du gradient $\nabla \varepsilon^k$ de l'indicateur $\varepsilon^k$.

Cette équation peut être exprimée sous forme vectorielle, comme suit :

$$\boldsymbol{\varphi_0^k} = \boldsymbol{\varphi_0^{k-1}} + \alpha^k \boldsymbol{p^k} \ (16')$$

On peut montrer que :

$$\boldsymbol{p^k} = -\boldsymbol{\nabla \varepsilon^k} + \beta^k \boldsymbol{p^{k-1}} \ (17)$$

où :

- $\nabla \varepsilon^k$ est un vecteur de gradient, de dimension ($N_{pix}$, 1), dont chaque terme représente une variation de l'indicateur $\varepsilon^k$ en fonction de chacun des degrés de liberté, formant les inconnues du problème, c'est-à-dire les termes du vecteur $\varphi_0^k$ ;
- $p^{k-1}$ est un vecteur de direction établi lors de l'itération précédente ;
- $\beta^k$ est facteur d'échelle appliqué au vecteur de direction $p^{k-1}$.

Chaque terme $\nabla \varepsilon^k(x,y)$ du vecteur de gradient $\nabla \varepsilon^k$, est tel que

$$\nabla \varepsilon^k(r') = \frac{\partial \varepsilon^k}{\partial \varphi_0^k(r')} = -\operatorname{Im}\left( A_0^{k^*}(r') \left( \left( S_x * \frac{S_x * A_z^k}{\varepsilon^k} + S_y * \frac{S_y * A_z^k}{\varepsilon^k} \right) * h_z \right)(r') \right) \quad (18)$$

où Im représente l'opérateur partie imaginaire et r' représente une coordonnée ($x,y$) dans le plan de de détection.
Le facteur d'échelle $\beta^k$ est un scalaire. Il peut être exprimé de telle sorte que :

$$\beta^{(k)} = \frac{\nabla \varepsilon^{(k)} . \nabla \varepsilon^{(k)}}{\nabla \varepsilon^{(k-1)} . \nabla \varepsilon^{(k-1)}} \quad (19),$$

le symbole . désignant un produit scalaire.
Le pas $\alpha^k$ peut varier selon les itérations, par exemple entre 0.03 au cours des premières itérations et 0.0005 lors des dernières itérations.

L'équation de mise à jour permet d'obtenir un ajustement du vecteur $\varphi_0^k$, ce qui entraîne une mise à jour itérative de la phase $\varphi_0^k(x,y)$ en chaque pixel de l'image complexe $A_0^k$. Cette image complexe $A_0^k$, dans le plan de détection, est alors mise à jour par ces nouvelles valeurs de la phase associée à chaque pixel. Notons que le module de l'image complexe $A_0^k$ n'est pas modifié, ce dernier étant déterminé à partir de l'image acquise par le capteur d'image, de telle sorte que $M_0^k(x,y) = M_0^{k=0}(x,y)$.

Etape 160 : Réitération ou sortie d'algorithme.

Tant qu'un critère de convergence n'est pas atteint, l'étape 160 consiste à réitérer l'algorithme, par une nouvelle itération des étapes 120 à 160, sur la base de l'image complexe $A_0^k$ mise à jour lors de l'étape 150.
Le critère de convergence peut être un nombre K prédéterminé d'itérations, ou une valeur minimale du gradient $\nabla \varepsilon^k$ de l'indicateur, ou une différence considérée comme négligeable entre deux vecteurs de phase $\varphi_0^{k-1}$, $\varphi_0^k$ consécutifs. Lorsque le critère de convergence est atteint, on dispose d'une estimation considérée comme correcte d'une image complexe de l'échantillon, dans le plan de détection $P_0$ ou dans le plan de reconstruction $P_z$.
Le procédé peut comprendre une ultime étape 170 de reconstruction d'une image complexe de l'échantillon $A_z$, dans le plan de reconstruction $P_z$, par application d'un opérateur de propagation à l'image de l'échantillon $A_0^k$ dans le plan de détection obtenue lors de la dernière itération.

La figure 2E représente une image du module $M_z^{k=30}$ de chaque pixel de l'image complexe de référence $A_z^{k=30}$ obtenue dans un plan de reconstruction $P_z$ à l'issue de 30 itérations. Cette image peut être comparée à la figure 2C, montrant une image similaire $A_z^{k=1}$ obtenue lors de la première itération. On observe une nette diminution du bruit de reconstruction, en particulier entre chaque particule.
Dans l'exemple qui a été donné, la grandeur $\varepsilon^k(x,y)$, associée à chaque pixel, mise en œuvre dans l'étape 130 est basée sur une dérivée dimensionnelle en chaque pixel $(x,y)$ de l'image $A_z^k$. Selon une variante, l'image initiale $A_0^{k=0}$ est normalisée, comme précédemment décrit, par un scalaire ou une image représentative de l'onde incidente 12. De cette façon, en chaque pixel, le module de l'image de l'échantillon, dans le plan de détection ou dans le plan de reconstruction, est inférieur ou égal à 1. La grandeur $\varepsilon^k(x,y)$ associée à chaque pixel, dans l'étape 130 est un module d'une différence de l'image $A_z^k$, en chaque pixel, et la valeur 1. Une telle grandeur peut être obtenue selon l'expression :

$$\varepsilon^k(x,y) = \sqrt{\left( A_z^k(x,y) - 1 \right)\left( A_z^k(x,y) - 1 \right)^*} = \left| A_z^k(x,y) - 1 \right| \quad (20)$$

et, lors de l'étape 140,

$$\varepsilon^k = \sum_{(x,y)} \varepsilon^k(x,y) \quad (21),$$

ce qui correspond, sous une forme non discrétisée, à

$$\varepsilon^k\left(A_z^k\right) = \int \left| A_z^k - 1 \right| = \int d\vec{r} . \sqrt{\left(A_z^k(r) - 1\right)\left(A_z^k(r) - 1\right)^*} \quad (22),$$

r désignant une coordonnée radiale dans le plan de reconstruction.

L'indicateur de bruit est à nouveau une norme d'ordre 1 d'un vecteur **E**$^k$ dont chaque terme est le module $\varepsilon^k(x,y)$ calculé en chaque pixel.

On peut montrer que le gradient de cet indicateur de bruit $\varepsilon^k$, par rapport au vecteur de phase, est tel que :

$$\nabla \varepsilon^k(r') = \frac{\partial \varepsilon^k}{\partial \varphi_0^k(r')} = \mathrm{Im}\left(A_0^{k^*}\right)(r') . \left( \frac{\left(A_z^k - 1\right)}{\left| A_z^k - 1 \right|} * h_z \right)(r') \quad (23)$$

r' désignant une coordonnée radiale dans le plan de détection.

De même que la norme de type variation totale, précédemment décrite, en lien avec l'expression (15), l'utilisation d'un tel indicateur est adapté à un échantillon comportant des particules 10b dispersées dans un milieu homogène 10a. Lors de l'algorithme de descente de gradient, cet indicateur tend à réduire le nombre de pixels dont le module n'est pas égal à 1 selon des zones réparties de façon discrètes dans l'image de l'échantillon, ces zones correspondant aux particules 10b de l'échantillon.

Selon une autre variante, lors de l'étape 130, la norme est telle que :

$$\varepsilon^k(x,y) = \left( \left( A_z^k(x,y) \right)\left( A_z^k(x,y) \right)^* - 1 \right) = \left| A_z^k(x,y) \right|^2 - 1 \quad (25)$$

Et, lors de l'étape 140,

$$\varepsilon^k = 1/2 \sum_{(x,y)} \left( \varepsilon^k(x,y) \right)^2 \quad (26),$$

ce qui correspond, sous une forme non discrétisée, à

$$\varepsilon^k = \frac{1}{2} \int \left( \left| A_z^k \right|^2 - 1 \right)^2 \quad (27)$$

De même que dans les modes de réalisation précédents, l'étape 130 comporte un calcul d'une grandeur $\varepsilon^k(x,y)$

associée à chaque pixel, basée sur un module de l'image complexe $A_z^k$, puis le calcul d'un indicateur de bruit associé à l'image complexe $A_z^k$ basé sur une norme. Selon cette variante, il s'agit d'une norme d'ordre 2.

On peut montrer que le gradient de cet indicateur, par rapport au vecteur de phase, est tel que :

$$\nabla \varepsilon^k(r') = \frac{\partial \varepsilon^k}{\partial \varphi_0^k(r')} = 2\,\mathrm{Im}\,A_0^{k^*}\left(\left(\left|A_z^k\right|^2 - 1\right)A_z^k\right) * h_z(r') \quad (28)$$

Selon une autre variante, lors de l'étape 130, la grandeur associée à chaque pixel est telle que

$$\varepsilon^k(x,y) = \varepsilon^k(x,y) = \left(\left(A_z^k(x,y)\right)\left(A_z^k(x,y)\right)^* - 1\right) = \left|A_z^k(x,y)\right|^2 - 1 \quad (30)$$

Et, lors de l'étape 140,

$$\varepsilon^k = \sum_{(x,y)} \varepsilon^k(x,y) \quad (31),$$

ce qui correspond, sous une forme non discrétisée, à

$$\varepsilon^k = \frac{1}{2}\int \left|\left|A_z^k\right|^2 - 1\right| \quad (32).$$

La grandeur associée à chaque pixel est identique à la variante précédente (cf. équation (25)), mais l'indicateur de bruit associé à l'image est calculé selon une norme d'ordre 1.

Selon une autre variante, lors de l'étape 130, la grandeur associée à chaque pixel est telle que

$$\varepsilon^k(x,y) = \left|\sqrt{\left(A_z^k(x,y)\right)\left(A_z^k(x,y)\right)^*} - 1\right| = \left|A_z^k(x,y)\right| - 1 \quad (35)$$

Et, lors de l'étape 140,

$$\varepsilon^k = \sum_{(x,y)} \varepsilon^k(x,y) \quad (36),$$

ce qui correspond, sous une forme non discrétisée, à

$$\varepsilon^k = \frac{1}{2}\int \left|\left|A_z^k\right| - 1\right| \quad (37)$$

Ainsi, quel que soit le mode de réalisation, l'indicateur de bruit $\varepsilon^k$ associé à une image complexe $A_z^k$, peut être obtenu par :

- le calcul d'une grandeur en une pluralité de pixels de l'image, basé sur une valeur de cette dernière, un module de cette dernière ou d'une dérivée dimensionnelle de cette dernière ;
- la combinaison desdites grandeurs sous la forme d'une norme, et de préférence d'une norme d'ordre inférieur à 1.

La figure 4 résume les principales étapes de l'algorithme précédemment décrit : à partir d'une image $I_0$ acquise par le capteur d'image 16, on forme une image initiale $A_0^{k=0}$. Lors de chaque itération $k$, une image complexe $A_z^k$, représentant l'onde lumineuse 22 dans un plan de reconstruction $P_z$ est établie par propagation numérique d'une image

$A_0^k$ représentant l'onde lumineuse 22 dans le plan de détection $P_0$. Un indicateur de bruit $\varepsilon^k$ est associé à l'image $A_z^k$.

Son gradient $\nabla \varepsilon^k$, en fonction de la phase $\varphi_0^k$ de l'onde lumineuse 22, dans le plan de détection $P_0$, est calculé, sur la base duquel ladite phase de l'onde lumineuse 22, dans le plan de détection, est mise à jour. Cette mise à jour permet de former une nouvelle image complexe $A_0^{k+1}$ dans le plan de détection $P_0$, sur la base de laquelle une nouvelle itération peut être menée. Un aspect notable de l'invention est que la mise à jour de la phase $\varphi_0^k$, dans le plan de détection $P_0$, est réalisée selon un algorithme d'optimisation sur la base du gradient de l'indicateur en fonction de ladite phase.

Sur les modes de réalisation précédemment décrits, l'indicateur $\varepsilon^k$ décrit une fonction croissante selon le bruit de reconstruction. En d'autres termes, plus le bruit de reconstruction est important, plus l'indicateur $\varepsilon^k$ est élevé. L'algorithme d'optimisation tend donc à minimiser cet indicateur, en particulier sur la base de son gradient $\nabla \varepsilon^k$. L'invention peut naturellement être appliquée en considérant un indicateur décrivant une fonction décroissante selon le bruit de reconstruction, l'indicateur étant d'autant plus faible que le bruit de reconstruction est élevé. L'algorithme d'optimisation tend alors à maximiser l'indicateur, en particulier sur la base de son gradient. D'une façon générale, il est préférable que l'indicateur de bruit suive une fonction monotone de l'amplitude cumulée du bruit de reconstruction sur l'image complexe.

L'invention a été mise en œuvre, en utilisant la norme de variation totale sur des cellules de type CHO, acronyme de cellules ovariennes de hamster, baignant dans un milieu de culture CD CHO (Thermofischer). L'échantillon a été placé dans une chambre fluidique d'épaisseur 100 $\mu$m, disposé à une distance de 8 cm d'une diode électroluminescente, dont la bande spectrale est centrée sur 450 nm. L'échantillon est placé à une distance de 1500 $\mu$m d'un capteur d'image CMOS de 2748x3840 pixels .L'ouverture du filtre spatial 18 a un diamètre de 150 $\mu$m.

La figure 5A représente l'image $I_0$ acquise par le capteur d'image 16. Les images du module et de la phase de l'image complexe de référence $A_{ref}$, dans le plan de l'échantillon $P_{10}$, sont respectivement représentées sur les figures 5B et 5C. Ces images ont été obtenues en 100 itérations. L'homogénéité des niveaux de gris entre chaque cellule atteste de la qualité de la reconstruction.

Un autre exemple est présenté sur les figures 6A à 6C. Dans ces exemples, l'échantillon comporte des globules rouges dilués dans une solution aqueuse comportant un tampon PBS (Tampon Phosphate Salin) dilué au 1/400. L'échantillon 10 a été placé dans une chambre fluidique 15 d'épaisseur 100 $\mu$m, disposée à une distance de 8 cm de la diode électroluminescente précédemment décrite, dont la bande spectrale est centrée sur 450 nm. L'échantillon est placé à une distance de 1.5 mm du capteur d'image CMOS précédemment décrit. L'ouverture du filtre spatial 18 s'élève à 150 $\mu$m.

La figure 6A représente l'image $I_0$ acquise par le capteur d'image. Les images du module et de la phase de l'image complexe $A_z^{k=8}$ reconstruite, dans le plan de l'échantillon $P_{10}$, sont respectivement représentées sur les figures 6B et 6C. Ces images ont été obtenues en 8 itérations.

Quel que soit le mode de réalisation, l'estimation d'une distance entre le plan de détection $P_0$ et le plan de l'échantillon $P_{10}$ peut être nécessaire, notamment lorsque l'image complexe de référence est formée dans le plan de ce dernier. Cette distance peut être connue de façon géométrique, ou peut être estimée par la mise en œuvre d'un algorithme d'autofocus, courant dans le domaine de la reconstruction holographique.

L'invention pourra s'appliquer à l'observation d'un échantillon par reconstruction holographique, l'hologramme étant obtenu soit par imagerie sans lentille, soit par imagerie défocalisée. Dans ce cas, l'hologramme est une image acquise par un capteur d'image, dans un plan différent du plan de focalisation d'un système optique couplé au capteur d'image.

Elle pourra s'appliquer à la caractérisation d'échantillons dans le domaine des biotechnologies, du diagnostic, mais également dans le domaine de l'agroalimentaire, ou de l'analyse d'échantillons prélevés dans l'environnement ou dans des procédés industriels.

## Revendications

1. Procédé d'observation d'un échantillon (10) comportant les étapes suivantes :

    a) illumination de l'échantillon à l'aide d'une source de lumière (11), apte à émettre une onde lumineuse (12) se propageant vers l'échantillon ;
    b) acquisition, à l'aide d'un capteur d'image (16), d'une image ($I_0$) de l'échantillon (10), formée dans un plan de détection ($P_0$), l'échantillon étant disposé entre la source de lumière (11) et le capteur d'image (16), l'image acquise étant représentative d'une onde lumineuse (22) transmise par l'échantillon sous l'effet de ladite illumination, l'image acquise comportant des figures d'interférence entre l'onde lumineuse émise par la source de lumière et une onde lumineuse diffractée par l'échantillon;

c) calcul d'une image complexe $\left(A_z^k, A_0^k\right)$ représentative de l'échantillon ;

le calcul de ladite image complexe de l'échantillon comportant les sous étapes suivantes :

i) définition d'une image initiale de l'échantillon $\left(A_0^{k=0}\right)$ dans le plan de détection, à partir de l'image ($I_0$) acquise par le capteur d'image ;

ii) détermination d'une image complexe de l'échantillon $\left(A_z^k\right)$ dans un plan de reconstruction ($P_z$) en appliquant un opérateur de propagation à l'image initiale de l'échantillon $\left(A_0^{k=0}\right)$ définie lors de la sous-étape i) ou à l'image de l'échantillon $\left(A_0^{k-1}\right)$, dans le plan de détection, résultant de l'itération précédente ;

iii) calcul d'un indicateur de bruit ($\varepsilon^k$) à partir de l'image complexe $\left(A_z^k\right)$ obtenue lors de la sous-étape ii) l'indicateur de bruit dépendant d'un bruit de reconstruction affectant ladite image complexe $\left(A_z^k\right)$, l'indicateur de bruit étant représentatif de fluctuations apparaissant sur ladite image complexe, le calcul de l'indicateur de bruit comportant :

· pour différents pixels ($x,y$), le calcul d'une grandeur ($\varepsilon^k(x,y)$) associée à chaque pixel, en fonction de la valeur de l'image complexe $\left(A_z^k\right)$ déterminée lors de la sous-étape ii) audit pixel, ou d'une dérivée dimensionnelle de ladite image complexe audit pixel;

· la combinaison des grandeurs ($\varepsilon^k(x,y)$) calculées en différents pixels ($x,y$), de façon à obtenir l'indicateur de bruit ($\varepsilon^k$) ;

iv) mise à jour de l'image de l'échantillon $\left(A_0^k\right)$ dans le plan de détection ($P_0$) par un ajustement de valeurs de phase $\left(\varphi_0^{k-1}(x,y)\right)$ des pixels de l'image initiale $\left(A_0^{k=0}\right)$ ou de l'image de l'échantillon $\left(A_0^{k-1}\right)$ résultant de l'itération précédente, dans le plan de détection, l'ajustement étant réalisé en fonction d'une variation de l'indicateur de bruit calculé lors de la sous-étape iii) selon lesdites valeurs de phase ;

v) réitération des sous-étapes ii) à iv) jusqu'à l'atteinte d'un critère de convergence, de façon à obtenir une image complexe de l'échantillon (10) dans le plan détection ($P_0$), ou dans le plan de reconstruction ($P_z$).

2. Procédé selon la revendication 1 dans lequel dans lequel l'indicateur de bruit ($\varepsilon^k$) est une norme d'ordre inférieur ou égal à 1 calculée à partir des grandeurs $\varepsilon^k(x,y)$ associées à chaque pixel.

3. Procédé selon l'une quelconque des revendications précédentes, dans lequel lors de la sous-étape iii), la grandeur ($\varepsilon^k(x,y)$) associée à chaque pixel ($x,y$) est calculée à partir du module d'une dérivée dimensionnelle, audit pixel, de l'image complexe $\left(A_z^k\right)$ déterminée lors de la sous-étape ii).

4. Procédé selon l'une quelconque des revendications 2 à 3, dans lequel lors de la sous-étape iii),l'indicateur de bruit ($\varepsilon^k$) est calculé à partir de la valeur de l'image complexe $\left(A_z^k\right)$ en une pluralité de pixels.

5. Procédé selon la revendication 4, dans lequel :

- lors de la sous-étape i), l'image initiale de l'échantillon $\left(A_0^{k=1}\right)$ est définie par une normalisation de l'image ($I_0$) acquise par le capteur d'image (16) par une image ($I_{12}$) représentative de l'onde lumineuse (12) émise par la source de lumière ;
- lors de la sous-étape iii), la grandeur ($\varepsilon^k(x,y)$) associée à chaque pixel est calculée en fonction de la valeur de l'image complexe $\left(A_z^k\right)$ déterminée lors de la sous-étape ii), audit pixel, soustraite d'un nombre strictement positif, notamment le nombre 1.

6. Procédé selon l'une quelconque des revendications précédentes, dans lequel lors de la sous-étape iii), l'indicateur de bruit ($\varepsilon^k$) est une somme, éventuellement pondérée, de la grandeur ($\varepsilon^k(x,y)$) associée à chaque pixel ($x,y$) de l'image complexe $\left(A_z^k\right)$ dans le plan de reconstruction.

7. Procédé selon l'une quelconque des revendications précédentes, tel que lors de la sous-étape iv), l'ajustement de la valeur de la phase de chaque pixel est réalisé en constituant un vecteur, dit vecteur de phase $\left(\varphi_0^k\right)$, dont chaque terme correspond à la valeur de la phase $\left(\varphi_0^k(x,y)\right)$ d'un pixel de l'image de l'échantillon dans le plan de détection ($P_0$), ce vecteur étant mis à jour, au cours de chaque itération, de façon soit à minimiser, soit à maximiser l'indicateur de bruit ($\varepsilon^k$) calculé lors de la sous-étape iii), en se basant sur un gradient ($\nabla \varepsilon^k$) de l'indicateur de bruit ($\varepsilon^k$) selon chaque terme dudit vecteur de phase.

8. Procédé selon la revendication 7, dans lequel la mise à jour du vecteur de phase est réalisée par un algorithme de minimisation ou de maximisation basé sur un gradient ($\nabla \varepsilon^k$) de l'indicateur de bruit ($\varepsilon^k$) selon chaque terme dudit vecteur de phase.

9. Procédé selon l'une quelconque des revendications précédentes, dans lequel le plan de reconstruction ($P_z$) s'étend parallèlement au plan de détection ($P_0$).

10. Procédé selon l'une quelconque des revendications précédentes, dans lequel le plan de reconstruction ($P_z$) est un plan ($P_{10}$) selon lequel s'étend l'échantillon (10).

11. Procédé selon l'une quelconque des revendications précédentes, dans lequel aucune optique de grossissement n'est interposée entre l'échantillon (10) et le capteur d'image (20).

12. Procédé selon l'une quelconque des revendications précédentes, le procédé comportant une étape d) de caractérisation de l'échantillon (10) en fonction de l'image complexe calculée.

13. Dispositif permettant l'observation d'un échantillon, comportant :

   - une source de lumière (11) apte à émettre une onde lumineuse incidente (12) se propageant vers l'échantillon (10) ;
   - un capteur d'image (16) ;
   - un support (10s), configuré pour maintenir l'échantillon (10) entre ladite source de lumière (11) et le capteur d'image (16) ;
   - un processeur (20), configuré pour recevoir une image de l'échantillon acquise par le capteur d'image (16) et à mettre en œuvre le procédé objet de l'une quelconque des revendications 1 à 12.

## Patentansprüche

1. Verfahren zur Beobachtung einer Probe (10), das die folgenden Schritte beinhaltet:

   a) Beleuchten der Probe mithilfe einer Lichtquelle (11), die geeignet ist, eine Lichtwelle (12) auszusenden, die sich zur Probe hin ausbreitet;
   b) Erfassen, mithilfe eines Bildsensors (16), eines Bildes ($I_0$) der Probe (10), das in einer Detektionsebene ($P_0$) gebildet wird, wobei die Probe zwischen der Lichtquelle (11) und dem Bildsensor (16) angeordnet ist, wobei das erfasste Bild für eine Lichtwelle (22) repräsentativ ist, die unter der Wirkung der Beleuchtung von der Probe durchgelassen wird, wobei das erfasste Bild Interferenzmuster zwischen der von der Lichtquelle ausgesendeten Lichtwelle und einer durch die Probe gebeugten Lichtwelle beinhaltet;
   c) Berechnen eines komplexen Bildes $\left(A_z^k,\ A_0^k\right)$, das für die Probe repräsentativ ist;

   wobei die Berechnung des komplexen Bildes der Probe die folgenden Teilschritte beinhaltet:

i. Definieren eines Ausgangsbildes der Probe $\left(A_0^{k=0}\right)$ in der Detektionsebene ausgehend von dem vom Bildsensor erfassten Bild ($I_0$);

ii. Bestimmen eines komplexen Bildes der Probe $\left(A_z^k\right)$ in einer Rekonstruktionsebene ($P_z$) in Anwendung eines Ausbreitungsoperators auf das Ausgangsbild der Probe $\left(A_0^{k=0}\right)$, das im Teilschritt i) definiert wurde, oder auf das Bild der Probe $\left(A_0^{k-1}\right)$, in der Detektionsebene, das aus der vorhergehenden Iteration resultiert;

iii. Berechnen eines Rauschindikators ($\varepsilon^k$) ausgehend von dem komplexen Bild $\left(A_z^k\right)$, das im Teilschritt ii) erhalten wurde, wobei der Rauschindikator von einem Rekonstruktionsrauschen abhängt, welches das komplexe Bild $\left(A_z^k\right)$ betrifft, wobei der Rauschindikator für Schwankungen repräsentativ ist, die auf dem komplexen Bild auftreten, wobei der Rauschindikator beinhaltet:

  • für verschiedene Pixel (*x,y*) das Berechnen einer jedem Pixel zugeordneten Größe ($\varepsilon^k(x,y)$) in Abhängigkeit von dem Wert des komplexen Bildes $\left(A_z^k\right)$, das beim Teilschritt ii) bestimmt wurde, in dem Pixel, oder einer dimensionalen Ableitung des komplexen Bildes in dem Pixel;
  • das Kombinieren der Größen ($\varepsilon^k(x,y)$), die an verschiedenen Pixeln (*x,y*) berechnet wurden, so dass der Rauschindikator ($\varepsilon^k$) erhalten wird;

iv. Aktualisieren des Bildes de Probe $\left(A_0^k\right)$ in der Detektionsebene ($P_0$) durch eine Anpassung von Phasenwerten $\left(\varphi_0^{k-1}(x,y)\right)$ der Pixel des Ausgangsbildes $\left(A_0^{k=0}\right)$ oder des Bildes der Probe $\left(A_0^{k-1}\right)$, das aus der vorhergehenden Iteration resultiert, in der Detektionsebene, wobei die Anpassung in Abhängigkeit von einer Variation des Rauschindikators, der im Teilschritt iii) berechnet wurde, entsprechend den Phasenwerten ausgeführt wird;

v. Reiteration der Teilschritte ii) bis iv) bis zum Erreichen eines Konvergenzkriteriums, so dass ein komplexes Bild der Probe (10) in der Detektionsebene ($P_0$) oder in der Rekonstruktionsebene ($P_z$) erhalten wird.

2. Verfahren nach Anspruch 1, bei dem der Rauschindikator ($\varepsilon^k$) eine Norm der Ordnung kleiner oder gleich 1 ist, die ausgehend von Größen $\varepsilon^k(x,y)$ berechnet wird, die jedem Pixel zugeordnet sind.

3. Verfahren nach einem der vorhergehenden Ansprüche, bei dem im Teilschritt iii) die Größe ($\varepsilon^k(x,y)$), die jedem Pixel (*x,y*) zugeordnet ist, ausgehend von dem Modul einer dimensionalen Ableitung, in dem Pixel, des komplexen Bildes $\left(A_z^k\right)$, das im Teilschritt ii) bestimmt wurde, berechnet wird.

4. Verfahren nach einem der Ansprüche 2 bis 3, bei dem im Teilschritt iii) der Rauschindikator ($\varepsilon^k$) ausgehend von dem Wert des komplexen Bildes $\left(A_z^k\right)$ an einer Vielzahl von Pixeln berechnet wird.

5. Verfahren nach Anspruch 4, bei dem:

  - im Teilschritt i) das Ausgangsbild der Probe $\left(A_0^{k=1}\right)$ durch eine Normalisierung des Bildes ($I_0$), das vom Bildsensor (16) erfasst wird, durch ein Bild ($I_{12}$), das für die von der Lichtquelle ausgesendete Lichtwelle (12) repräsentativ ist, definiert wird;
  - im Teilschritt iii) die Größe ($\varepsilon^k(x,y)$), die jedem Pixel zugeordnet ist, in Abhängigkeit von dem Wert des komplexen Bildes $\left(A_z^k\right)$, das im Teilschritt ii) bestimmt wurde, in dem Pixel berechnet wird, subtrahiert von einer strikt positiven Zahl, insbesondere der Zahl 1.

6. Verfahren nach einem der vorhergehenden Ansprüche, bei dem im Teilschritt iii) der Rauschindikator ($\varepsilon^k$) eine Summe, gegebenenfalls gewichtet, der jedem Pixel (*x,y*) des komplexen Bildes $\left(A_z^k\right)$ in der Rekonstruktionsebene

zugeordneten Größe ($\varepsilon^k(x,y)$) ist.

7. Verfahren nach einem der vorhergehenden Ansprüche, bei dem im Teilschritt iv) das Anpassen des Werts der Phase jedes Pixels ausgeführt wird, indem ein Vektor, Phasenvektor $\left(\boldsymbol{\varphi}_0^k\right)$ genannt, gebildet wird, von dem jeder Term dem Wert der Phase $\left(\varphi_0^k(x,y)\right)$ eines Pixels des Bildes der Probe in der Detektionsebene ($P_0$) entspricht, wobei dieser Vektor während jeder Iteration so aktualisiert wird, dass der im Teilschritt iii) berechnete Rauschindikator ($\varepsilon^k$) entweder minimiert oder maximiert wird, wobei ein Gradient ($\nabla \varepsilon^k$) des Rauschindikators ($\varepsilon^k$) gemäß jedem Term des Phasenvektors zugrunde gelegt wird.

8. Verfahren nach Anspruch 7, bei dem das Aktualisieren des Phasenvektors durch einen Minimierungs- oder Maximierungsalgorithmus ausgeführt wird, der auf einem Gradienten ($\nabla \varepsilon^k$) des Rauschindikators ($\varepsilon^k$) gemäß jedem Term des Phasenvektors beruht.

9. Verfahren nach einem der vorhergehenden Ansprüche, bei dem sich die Rekonstruktionsebene ($P_z$) parallel zur Detektionsebene ($P_0$) erstreckt.

10. Verfahren nach einem der vorhergehenden Ansprüche, bei dem die Rekonstruktionsebene ($P_z$) eine Ebene ($P_{10}$) ist, entlang der sich die Probe (10) erstreckt.

11. Verfahren nach einem der vorhergehenden Ansprüche, bei dem keine Vergrößerungsoptik zwischen die Probe (10) und den Bildsensor (20) gesetzt ist.

12. Verfahren nach einem der vorhergehenden Ansprüche, wobei das Verfahren einen Schritt d) der Charakterisierung der Probe (10) in Abhängigkeit von dem berechneten komplexen Bild beinhaltet.

13. Vorrichtung, die das Beobachten einer Probe ermöglicht, beinhaltend:

- eine Lichtquelle (11) der geeignet ist, eine einfallende Lichtwelle (12) auszusenden, die sich zur Probe (10) hin ausbreitet;
- einen Bildsensor (16);
- einen Träger (10s), der dazu ausgestaltet ist, die Probe (10) zwischen der Lichtquelle (11) und dem Bildsensor (16) zu halten;
- einen Prozessor (20), der dazu ausgestaltet ist, ein vom Bildsensor (16) erfasstes Bild der Probe zu empfangen und das Verfahren, das Gegenstand eines der Ansprüche 1 bis 12 ist, auszuführen.

**Claims**

1. Method for observing a sample (10) comprising the following steps:

a) illuminating the sample using a light source (11), able to emit a light wave (12) that propagates towards the sample;
b) acquiring, using an image sensor (16), an image ($I_0$) of the sample (10), said image being formed in a detection plane ($P_0$), the sample being placed between the light source (11) and the image sensor (16), the acquired image being representative of a light wave (22) transmitted by the sample under the effect of said illumination, the acquired image comprising interference patterns formed by interference between the light wave emitted by the light source and a light wave diffracted by the sample; and
c) calculating a complex image $\left(A_z^k, A_0^k\right)$ representative of the sample;

the calculation of said complex image of the sample comprising the following substeps:

i) defining an initial image $\left(A_0^{k=0}\right)$ of the sample in the detection plane, on the basis of the image ($I_0$) acquired by the image sensor;
ii) determining a complex image $\left(A_z^k\right)$ of the sample in a reconstruction plane ($P_z$) by applying a propagation operator to the initial image $\left(A_0^{k=0}\right)$ of the sample, i.e. to the image defined in substep i), or to the image $\left(A_0^{k-1}\right)$ of the sample, in the detection plane, resulting from the preceding iteration;

iii) calculating a noise indicator $(\varepsilon^k)$ on the basis of the complex image $\left(A_z^k\right)$ obtained in substep ii), the noise indicator depending on a reconstruction noise affecting said complex image $\left(A_z^k\right)$, the noise indicator being representative of fluctuations appearing in said complex image, the calculation of the noise indicator comprising

- for various pixels $(x,y)$, calculating a quantity $(\varepsilon^k(x,y))$ associated with each pixel, depending on the value of the complex image $\left(A_z^k\right)$ determined in substep ii) for said pixel, or on a dimensional derivative of said complex image for said pixel; and
- combining the quantities $(\varepsilon^k(x,y))$ calculated for different pixels $(x,y)$, so as to obtain the noise indicator $(\varepsilon^k)$;

iv) updating the image $\left(A_0^k\right)$ of the sample in the detection plane $(P_0)$ by adjusting phase values $\left(\varphi_0^{k-1}(x,y)\right)$ of the pixels of the initial image $\left(A_0^{k=0}\right)$ or of the image $\left(A_0^{k-1}\right)$ of the sample resulting from the preceding iteration, in the detection plane, the adjustment being carried out depending on a variation in the noise indicator calculated in substep iii) depending on said phase values;

v) reiterating substeps ii) to iv) until a convergence criterion is reached, so as to obtain a complex image of the sample (10) in the detection plane $(P_0)$, or in the reconstruction plane $(P_z)$.

2. Method according to Claim 1, wherein the noise indicator $(\varepsilon^k)$ is a norm of order lower than or equal to 1 calculated on the basis of the quantities $\varepsilon^k(x,y)$ associated with each pixel.

3. Method according to either one of the preceding claims, wherein, in substep iii), the quantity $(\varepsilon^k(x,y))$ associated with each pixel $(x,y)$ is calculated on the basis of the modulus of a dimensional derivative, for said pixel, of the complex image $\left(A_z^k\right)$ determined in substep ii).

4. Method according to either one of Claims 2 to 3, wherein, in substep iii), the noise indicator $(\varepsilon^k)$ is calculated on the basis of the value of the complex image $\left(A_z^k\right)$ in a plurality of pixels.

5. Method according to Claim 4, wherein:

- in substep i), the initial image $\left(A_0^{k=1}\right)$ of the sample is defined by normalizing the image $(I_0)$ acquired by the image sensor (16) by an image $(I_{12})$ representative of the light wave (12) emitted by the light source;
- in substep iii), the quantity $(\varepsilon^k(x,y))$ associated with each pixel is calculated depending on the value of the complex image $\left(A_z^k\right)$ determined in substep ii), for said pixel, subtracted from a strictly positive number, in particular the number 1.

6. Method according to any one of the preceding claims, wherein, in substep iii), the noise indicator $(\varepsilon^k)$ is a sum, which is optionally weighted, of the quantity $(\varepsilon^k(x,y))$ associated with each pixel $(x,y)$ of the complex image $\left(A_z^k\right)$ in the reconstruction plane.

7. Method according to any one of the preceding claims, such that, in substep iv), the value of the phase of each pixel is adjusted by forming a vector, called the phase vector $\left(\boldsymbol{\varphi_0^k}\right)$, each term of which corresponds to the value of the phase $\left(\varphi_0^k(x,y)\right)$ of a pixel of the image of the sample in the detection plane $(P_0)$, this vector being updated, in each iteration, so as to minimize, or to maximize, the noise indicator $(\varepsilon^k)$ calculated in substep iii), this operation being based on a gradient $(\nabla \varepsilon^k)$ of the noise indicator $(\varepsilon^k)$ depending on each term of said phase vector.

8. Method according to Claim 7, wherein the phase vector is updated by a minimization or maximization algorithm based on a gradient ($\nabla \varepsilon^k$) of the noise indicator ($\varepsilon^k$) depending on each term of said phase vector.

9. Method according to any one of the preceding claims, wherein the reconstruction plane ($P_z$) lies parallel to the detection plane ($P_0$).

10. Method according to any one of the preceding claims, wherein the reconstruction plane ($P_z$) is a plane ($P_{10}$) in which the sample (10) lies.

11. Method according to any one of the preceding claims, wherein no magnifying optic is interposed between the sample (10) and the image sensor (20).

12. Method according to any one of the preceding claims, the method comprising a step d) of characterizing the sample (10) depending on the calculated complex image.

13. Device allowing a sample to be observed, comprising:

- a light source (11) able to emit an incident light wave (12) that propagates towards the sample (10);
- an image sensor (16);
- a holder (10s), configured to hold the sample (10) between said light source (11) and the image sensor (16); and
- a processor (20), configured to receive an image of the sample acquired by the image sensor (16) and to implement the method that is the subject of any one of Claims 1 to 12.

**Fig. 1**

**Fig. 2B**

**Fig. 2C**

**Fig. 2D**

**Fig. 2E**

$$I_0$$

$$A_0^{k=1}$$

$$A_z^k$$

$$\epsilon^k(x,y)$$

$$\epsilon^k$$

$$\nabla\epsilon^k$$

$$A_0^k$$

$$\varphi_0^k(x,y)$$

$$A_0^k \quad \varphi_0^k(x,y)$$

$$A_Z$$

**Fig. 2A**

**Fig. 3A**

**Fig. 3B**

**Fig. 4**

**Fig. 5A**

**Fig. 5B**

**Fig. 5C**

**Fig. 6A**

**Fig. 6B**

**Fig. 6C**

## RÉFÉRENCES CITÉES DANS LA DESCRIPTION

**Documents brevets cités dans la description**

- WO 2008090330 A

- US 20120218379 A

**Littérature non-brevet citée dans la description**

- **DENIS L et al.** Numerical suppression of the twin image in in-line holography of a volume of micro-objects. *MEASUREMENT SCIENCE AND TECHNOL, IOP, BRISTOL,* 01 Juillet 2008, vol. 19 (7), 74004